# EUROPÄISCHE PATENTSCHRIFT

(11) **EP 3 271 980 B1**
(45) Veröffentlichungstag und Bekanntmachung des Hinweises auf die Patenterteilung: **18.09.2019**
(21) Anmeldenummer: 16712776.0
(22) Anmeldetag: 18.03.2016
(51) Int. Cl.: H02G 3/04, B29D 23/18, B29C 53/08, F16L 11/15, B60R 16/02

(54) **WELLROHR AUS KUNSTSTOFF ZUM UMMANTELN VON LEITUNGEN**
CORRUGATED PLASTIC TUBE FOR ENCASING WIRES
TUBE ONDULÉ EN MATIÈRE PLASTIQUE POUR GAINER DES CONDUITES

(30) Priorität: 20.03.2015 DE 102015104256
(43) Veröffentlichungstag der Anmeldung: 24.01.2018
(73) Patentinhaber: SCHLEMMER GMBH, 85586 Poing (DE)
(72) Erfinder: CHU, Van Ngoc, 85586 Poing (DE)
(74) Vertreter: Horn Kleimann Waitzhofer Patentanwälte PartG mbB
(86) Internationale Anmeldenummer: PCT/EP2016/055930
(87) Internationale Veröffentlichungsnummer: WO 2016/150839

(56) Entgegenhaltungen:
- EP-A1- 2 182 599
- EP-A2- 0 882 925
- DE-A1- 19 904 977

## Beschreibung

Die Erfindung bezieht sich auf ein Wellrohr aus flexiblem Kunststoff zum Ummanteln von Leitungen, mit über seine axiale Länge verteilten, abwechselnd aufeinanderfolgenden umlaufenden Wellenbergen und Wellentälern. Solche Wellrohre werden auf einer Vielzahl von Anwendungsgebieten, z. B. in der Automobiltechnik, eingesetzt, wobei in ihrem Inneren Kabel bzw. Kabelstränge, Leitungen o. ä. aufgenommen und durch das sie umhüllende Wellrohr gegen unerwünschte Einflüsse von außen geschützt werden. Beispiele hierfür sind in der EP 0882 925 A2, der DE 199 04 977 A1 und der EP 2 182 599 A1 bekannt geworden.

Bei Einsatzgebieten, bei denen es auf bewegliche Anwendungen solcher Wellrohre ankommt, wie etwa in der Robotertechnik beim Verlegen von Leitungen entlang von Roboterarmen oder auch bei Busgelenken, deren Gelenkspiel laufend auf die verlegten Wellrohre wirkt, besteht die Forderung, dass die eingesetzten Wellrohre einerseits eine große Flexibilität und andererseits auch eine hohe Abriebfestigkeit aufweisen sollen. Hierbei handelt es sich allerdings um einander widersprechende Anforderungen an die Werkstoffe für die Wellrohre: Werkstoffe mit großer Flexibilität weisen in der Regel eine große Haftfestigkeit und hieraus sich ergebend eine schlechte Abriebfestigkeit auf, während Materialien mit großer Abriebfestigkeit im Allgemeinen eine geringe Reibung und eine relativ große Härte haben. Diese Schwierigkeiten führen dazu, dass auf solchen Einsatzgebieten üblicherweise mehrteilige Lösungen für die hier anzuwendenden Wellrohre eingesetzt werden müssen.

Ausgehend hiervon liegt der Erfindung die Aufgabe zugrunde, ein verbessertes Wellrohr bereitzustellen, insbesondere einen Aufbau für ein flexibles Wellrohr aus Kunststoff vorzuschlagen, das keinen mehrteiligen Aufbau aufweist und in besonders guter Weise im Einsatz die weiter oben angegebenen Anforderungen hoher Flexibilität bei gleichzeitig guter Abriebfestigkeit voll erfüllt.

Demgemäß wird dies bei einem Wellrohr der eingangs genannten Art dadurch erreicht, dass die Wellenberge, im Querschnitt senkrecht zur Längsachse des Wellrohres gesehen, jeweils entlang ihrem Außenumfang mit einer umlaufenden Wellung versehen sind, die in Umlaufrichtung jedes Wellenberges abwechselnd radial vorragende Bereiche und radial nach innen versetzte Bereiche ausbildet, und dass das Wellrohr sich axial über seine Länge erstreckende, in seiner Umfangsrichtung nebeneinander angeordnete Wandabschnitte umfasst, deren eine in der Wellung die radial vorragenden Bereiche und deren andere die radial jeweils nach innen versetzt liegenden Bereiche ausbilden, wobei diese Wandabschnitte umlaufend abwechselnd aus Werkstoffen unterschiedlicher Härte bestehen.

Somit wird ein Wellrohr bereitgestellt, das eine äußere Auflagefläche bzw. eine Vielzahl von äußeren Auflagepunkten aufweist, die härter oder weicher ist als andere Teile des Wellrohrs, so dass eine höhere Abriebfestigkeit (harte Auflagefläche) trotz hoher Elastizität des Wellrohrs oder eine bessere Haftung (weiche Auflagefläche) trotz höherer Steifigkeit des Wellrohrs verwirklicht wird.

Gemäß einer Ausführungsform ist vorgesehen, dass die Wandabschnitte, die die radial vorragenden Bereiche ausbilden, jeweils aus einem Werkstoff bestehen, der härter ist als der Werkstoff der anderen, die radial innen liegenden Bereiche ausbildenden Wandabschnitte

Gemäß einer weiteren Ausführungsform liegen die Wandabschnitte parallel nebeneinander in Umfangsrichtung.

Bei dem Wellrohr wird somit vorzugsweise ein Aufbau mit zwei Werkstoffen unterschiedlicher Härte eingesetzt, wobei im Einsatz der Werkstoff mit der geringeren Härte die Flexibilität des Wellrohres und der mit der größeren Härte die Abriebfestigkeit des Wellrohres bestimmt. Dabei ist der prinzipielle Aufbau des Wellrohres vorzugsweise so ausgelegt, dass im eingebauten und verlegten Zustand nur die aus dem Werkstoff mit härterem Material gebildeten Wandabschnitte in Reibkontakt mit dem beweglichen Reib-Gegenpartner stehen, an dem das Wellrohr verlegt ist, indem diese Wandbereiche mit härterem Werkstoff über den Außenumfang des Wellrohres als dort radial überstehende, axial verlaufende Längsabschnitte ausgebildet sind, die infolge ihres radialen Überstandes den Reibkontakt mit der entsprechenden Gegenfläche ausbilden.

Die anderen Wandbereiche des Wellrohres, die demgegenüber radial nach innen hin versetzt sind, gelangen wegen dieses Versatzes jedoch nicht in Anlage gegen den Reibpartner, so dass sie vorzugsweise wegen ihres Werkstoffs geringerer Härte eine gute Flexibilität des Wellrohres bewirken, ohne einer Reibwirkung und dem daraus folgenden Abrieb zu unterliegen.

Dadurch, dass beim Wellrohr vorzugsweise unterschiedliche Materialien für die Funktionen einerseits Abriebfestigkeit und andererseits Flexibilität verantwortlich sind, können die entsprechenden Wandabschnitte des Wellrohres durch Auswahl geeigneter Werkstoffe so ausgelegt werden, dass der betreffende Werkstoff ganz gezielt die gestellten Anforderungen an Abriebfestigkeit bzw. an Flexibilität erfüllt, ohne dass dabei die jeweils andere Anforderung berücksichtigt werden müsste.

Weil vorzugsweise am Außenumfang des Wellrohres nicht nur in dessen Längsrichtung abwechselnd umlaufende Wellenberge und Wellentäler vorgesehen sind, sondern auch, in Umfangsrichtung jedes der Wellenberge gesehen, dort ebenfalls eine umlaufende Wellung ausgebildet ist, führt dies dazu, dass auch an den umlaufenden Wellenbergen entlang deren Außenumfang zwischen zwei aufeinanderfolgenden Wandbereichen mit härterem Werkstoff stets ein dazwischen liegender, radial zurückgesetzter Wandbereich mit weicherem Werkstoff vorliegt, wodurch insbesondere nicht nur in axialer Richtung des Wellrohres, sondern auch in dessen Umfangsrichtung eine sehr gute Flexibilität erreicht wird.

In vielen Einsatzfällen hat es sich als besonders zweckmäßig erwiesen, wenn der weichere Werkstoff ein Kunststoff mit einer Shore-A-Härte im Bereich von 10 bis 70 und/oder, gleichfalls vorzugsweise, der härtere Werkstoff ein Kunststoff mit einer Shore-D-Härte im Bereich von 40 bis 90 ist.

Vorzugsweise besteht dabei der härtere Werkstoff aus einem geeigneten Polypropylen (PP) oder Polyamid und der weichere Werkstoff aus einem thermoplastischen Elastomer (TPE).

Eine vorteilhafte Ausgestaltung besteht auch darin, dass die Wandabschnitte in radialer Richtung des Wellrohres jeweils örtlich die gesamte Wanddicke desselben ausbilden.

In einer anderen, aber ebenfalls vorteilhaften Ausgestaltung kann jedoch auch vorgesehen werden, dass die Wandabschnitte aus härterem Werkstoff sich in radialer Richtung des Wellrohres jeweils nur über einen Teil der Wanddicke desselben erstrecken, während das ganze restliche Wellrohr aus dem weicheren Werkstoff besteht. Dabei kann der härtere Werkstoff in dem Wandabschnitt, den er ausbildet, sich, in Umfangsrichtung dieses Wandabschnitts gesehen, auch unterschiedlich weit radial in die Wanddicke des Wellrohres hinein erstrecken, wobei im mittleren Abschnitt der Breite dieses Wandabschnitts jedoch der härtere Werkstoff sich am weitesten in die Wanddicke des Wellrohres hinein erstreckt.

Die Anzahl der Wandabschnitte aus weicherem Werkstoff und aus härterem Werkstoff, die über den Umfang des Wellrohres verteilt vorgesehen werden, können insbesondere entsprechend den Anforderungen des jeweiligen Anwendungsfalls gewählt werden. Es hat sich als sehr vorteilhaft und für viele Anwendungsfälle als sehr geeignet gezeigt, wenn insbesondere die Anzahl der Wandabschnitte aus beiden Werkstoffen jeweils 12 oder 16 beträgt.

Eine weitere vorteilhafte Ausgestaltung des Wellrohres besteht darin, dass die in der umlaufenden Wellung der Wellenberge radial vorragenden Bereiche der Wandabschnitte aus härterem Werkstoff, in axialer Richtung des Wellrohres gesehen, eine größere Breite als die sich anschließenden Wandabschnitte aus weicherem Werkstoff aufweisen. Damit können besonders große örtlich wirksame Reibflächen geschaffen werden, wodurch im Reibfall die auftretende Druckbelastung der aneinander reibenden Flächen verkleinert und dadurch auch der entstehende Abrieb vermindert werden kann.

Dabei sind bevorzugt die radial in der umlaufenden Wellung der Wellenberge vorragenden Bereiche der Wandabschnitte aus härterem Werkstoff an ihren den benachbarten Wandabschnitten aus weicherem Werkstoff zugewandten Seiten, in Umfangsrichtung gesehen, beidseits über jeweils einen radial gerichteten, axialen Absatz mit der jeweils zugewandten Seitenflanke des benachbarten Wandabschnitts aus weicherem Werkstoff verbunden, wodurch die Wellenbreite des Bereiches mit härterem Werkstoff größer als im Bereich des daneben liegenden Wandabschnitts aus weicherem Werkstoff ist. Es hat sich gezeigt, dass in vielen Fällen ein axialer Absatz von etwa 0,5 mm zwischen beiden Bereichen empfehlenswert ist.

Das Wellrohr vermeidet die Notwendigkeit eines mehrteiligen Aufbaus, die sich insbesondere bei beweglichen Anwendungen bislang als notwendig erwiesen hatte. Darüber hinaus ist das Wellrohr aber auch von einem relativ einfachen Aufbau und kann auf dem Weg einer Co-Extrusion in bekannter Extrusionstechnik unschwer hergestellt werden. Dabei wird aus einem Hauptextruder das weiche Material und aus einem Beispritzextruder das härtere Material extrudiert. Die Schmelze aus dem weichem Werkstoff, die aus dem Hauptextruder kommt, wird einem Torpedo zugeführt, dort ringförmig aufgefächert, wobei zwischen Torpedo und Spritzdüse ein Plattenverteiler zwischengeschaltet ist, in den der Beispritzextruder die Schmelze des härteren Werkstoffs einleitet. Der Plattenverteiler führt dann die Schmelze des harten Werkstoffs über verschiedene Ausgänge in den vorbeilaufenden Fluss des weicheren Werkstoffs ein und verdrängt dabei letzteren örtlich bei der Einleitung. Dabei kann im weicheren Werkstoff die radiale Eindringtiefe des härteren Werkstoffs durch dessen Temperatur und Druck gesteuert werden. Es entsteht ein Rohling für ein Wellrohr mit axialen Streifen aus härterem Material, der dann einem nachgeschalteten Corrugator zur Ausbildung der endgültigen Form des Wellrohrs zugeführt werden kann. Das Wellrohr weist nach Durchlaufen des Corrugators gewellte axiale Streifen aus härterem Material und gewellte axiale Streifen aus weicherem Material auf. Die entsprechenden Wellen weisen eine Ausbreitungsrichtung in axialer Richtung des Wellrohrs auf.

Die Ausführungsformen der Erfindung werden nachfolgend anhand der Zeichnungen im Prinzip beispielshalber noch näher erläutert. Es zeigen:
- Fig. 1: eine Vorderansicht eines Wellrohres;
- Fig. 2: eine Seitenansicht des Wellrohres aus Fig. 1;
- Fig. 3: die vergrößerte Einzelheit A aus Fig. 1;
- Fig. 4: die vergrößerte Einzelheit B aus Fig. 2;
- Fig. 5: eine Vorderansicht auf eine andere Ausführungsform eines Wellrohres, und
- Fig. 6: eine vergrößerte Detaildarstellung der Einzelheit C aus Fig. 5.

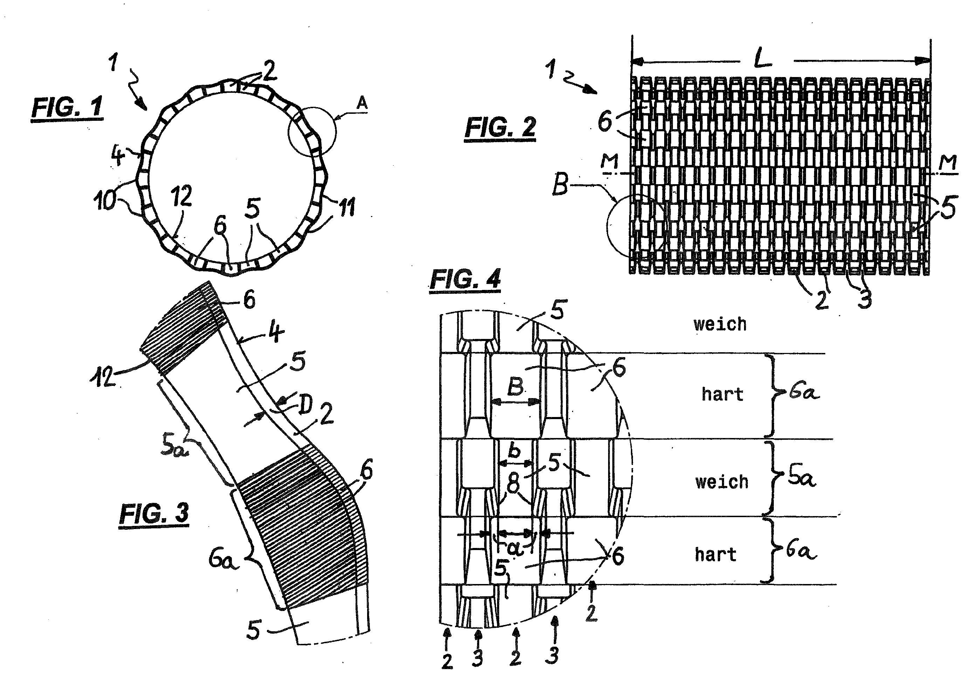

In Fig. 1 ist in Vorderansicht und in Fig. 2 in Seitenansicht ein Wellrohr 1 mit einer Längs-Mittelachse ***M - M*** gezeigt. Solche Wellrohre dienen im praktischen Einsatz oft zur Aufnahme von Leitungen, Kabeln o. ä., die in den Figuren jedoch in der Darstellung weggelassen sind.

Aus der Darstellung der Fig. 2 ist ersichtlich, dass das Wellrohr 1 mit über seine axiale Länge ***L*** hinweg verteilten, abwechselnd aufeinanderfolgenden, jeweils umlaufenden Wellenbergen 2 und Wellentälern 3 versehen ist.

In der Vorderansicht aus Fig. 1 stellt der radiale Außenumfang den Außenumfang der Wellenberge 2 dar, wobei aus Fig. 1 erkennbar ist, dass die Wellenberge 2 an ihrem radialen Außenumfang, in Umfangsrichtung desselben gesehen, mit einer umlaufenden Wellung 4 versehen sind. Dabei werden durch diese Wellung 4 an jedem Wellenberg 2, in Umfangsrichtung gesehen, abwechselnd radial vorragende Abschnitte 10 und radial zurückgesetzte Abschnitte 11 gebildet, wobei bei dem in den Figuren 1 und 2 gezeigten Wellrohr 1 entlang einem Umfang jeweils 16 radial vorragende Abschnitte 10 und, zwischen diesen, 16 radial zurückgesetzte Abschnitte 11 ausgebildet sind. Stattdessen könnten aber auch eine andere Anzahl solcher radial vorspringender Abschnitte 10 und radial zurückgesetzter Abschnitte 11 am Außenumfang jedes Wellenberges 2 ausgebildet sein, etwa nur 12 oder nur 8, aber auch mehr als 16. Die eingesetzte Anzahl der radial vorragenden Abschnitte 10 und der radial zurückgesetzten Abschnitte 11 kann nach den Erfordernissen des Einsatzgebietes, für welches das Wellrohr 1 bestimmt ist, geeignet gewählt werden.

Die in Fig. 1 dargestellte kreisförmige innere Umfangslinie 12 des Wellrohres 1 gibt den, insbesondere kreisförmigen, Innenumfang der Wellentäler 3 im Inneren des Wellrohres 1 wieder.

Wie aus Fig. 1 ebenfalls entnommen werden kann, besteht das Wellrohr 1 aus einzelnen miteinander verbundenen und nebeneinander angeordneten Wandabschnitten 5 und 6, deren jeder, in Längsrichtung des Wellrohres 1 gesehen, sich über dessen gesamte Länge ***L*** axial erstreckt, wobei die Wandabschnitte 5 die radial jeweils in der Wellung 4 nach innen versetzt liegenden Bereiche und die Wandabschnitte 6 die in der Wellung 4 radial vorragenden Bereiche ausbilden. Dabei bestehen die Wandabschnitte 5, welche die radial innen liegenden Bereiche bilden, aus einem flexiblen elastischen Kunststoff, der eine zu dem flexiblen elastischen Kunststoff der daneben liegenden Wandabschnitte 6, welche die radial vorspringenden Abschnitte des Wellrohres 1 ausbilden, unterschiedliche Härte aufweist, nämlich derart, dass der Werkstoff der radial vorspringenden Wandabschnitte 6 härter ist als der Werkstoff der radial nach innen zurückgesetzten Abschnitte 5.

Fig. 3 zeigt die Einzelheit A aus Fig. 1 in einer radial stark vergrößerten Detaildarstellung und in einer schematisierten Form:
Aus Fig. 3 ist die radiale Wanddicke ***D*** eines Wellenberges 2 ersichtlich, der über seinen radialen Außenumfang hinweg mit der Wellung 4 versehen ist. Schematisch in Fig. 3 eingezeichnet sind die in Umfangsrichtung des Wellrohres 1 nebeneinander liegenden Wandabschnitte 5 und 6, wobei die Wandabschnitte 6 aus härterem Kunststoff gestrichelt dargestellt sind, während die sich beidseits an diese anschließenden Wandabschnitte 5 aus weicherem Kunststoff bestehen und ohne Schraffur gezeichnet sind.

Infolge der umlaufenden Wellung 4 an jedem Wellenberg 2 liegen die Wandabschnitte 5 aus weicherem und die Wandabschnitte 6 aus härterem Material umlaufend alternierend nebeneinander.

In Fig. 4 ist die Einzelheit B aus Fig. 2 in einer Detail-Seitendarstellung in starker Vergrößerung wiedergegeben, wobei die in radialer Richtung nebeneinander liegenden, sich axial erstreckenden Wandabschnitte 5 aus weichem Material und die Wandabschnitte 6 aus härterem Material ausdrücklich ausgewiesen sind. Somit sind in Längsrichtung des Wellrohrs 1 gewellte axiale Streifen 6a aus härterem Material und gewellte axiale Streifen 5a aus weicherem Material ausgebildet. Die Wandung des Wellrohrs 1 ist bevorzugt gänzlich aus abwechselnd und benachbart angeordneten, einstückig miteinander verbundenen Streifen 5a, 6a gebildet. Bspw. können 8 - 16 (oder auch mehr oder weniger) solcher Streifen 5a, 6a die Wandung des Wellrohrs 1 bilden.

Dabei ist aus Fig. 4 erkennbar, dass die Wandabschnitte 6, welche die radial vorspringenden Bereiche in der umlaufenden Wellung 4 ausbilden, in axialer Richtung des Wellrohres 1 gesehen eine Breite ***B*** aufweisen, die größer ist als die Breite **b** der sich beidseits in Umlaufrichtung anschließenden Wandabschnitte 5 weicheren Werkstoffs, welche die radial zurückgesetzten Abschnitte in der umlaufenden Wellung 4 ausbilden.

Dabei mündet, entlang jedem Wellenberg 2 in dessen Umfangsrichtung gesehen, jeder Wandabschnitt 6 härteren Materials beidseits über jeweils einen radial gerichteten axialen Absatz ***a*** in die zugewandte Seitenflanke 8 des benachbarten Wandabschnitts 5 aus weicherem Material, wie dies in Fig. 4 dargestellt ist. Liegt ein Wellrohr 1, wie es mit seinem Aufbau in den Figuren 1 bis 4 gezeigt ist, an seiner Außenseite gegen irgendeine reibende Gegenfläche an, dann ist unschwer verständlich, dass nur die am Außenumfang radial vorragenden Wandabschnitte 6 an ihren vorragenden Flächen mit der Gegenfläche in Berührung kommen können, während die radial zurückgezogenen Wandabschnitte 5 in keinen Kontakt mit dieser Gegenfläche gelangen können. Findet dabei eine Relativbewegung zwischen der Gegenfläche und den sie berührenden Bereichen der Wandabschnitte 6 statt, bedeutet dies, dass nur Wandabschnitte 6 aus härterem Material und damit mit einer größeren Abriebfestigkeit als die daneben liegenden Wandabschnitte 5 aus weicherem Material an dem Reibprozess teilnehmen, so dass ausschließlich das härtere Kunststoffmaterial der Wandabschnitte 6 die Abriebfestigkeit des Wellrohres 1 gegenüber einer reibenden Gegenfläche bestimmt.

Demgegenüber bestimmt das weichere Material der radial zurückgesetzten Wandabschnitte 5 das flexible Verhalten des gesamten Wellrohres 1 und kann entsprechend ausgelegt werden, ohne dass sich das härtere Material der Wandabschnitte 6 dabei ungünstig auf die Gesamtflexibilität dieses Wellrohres 1 auswirkt.

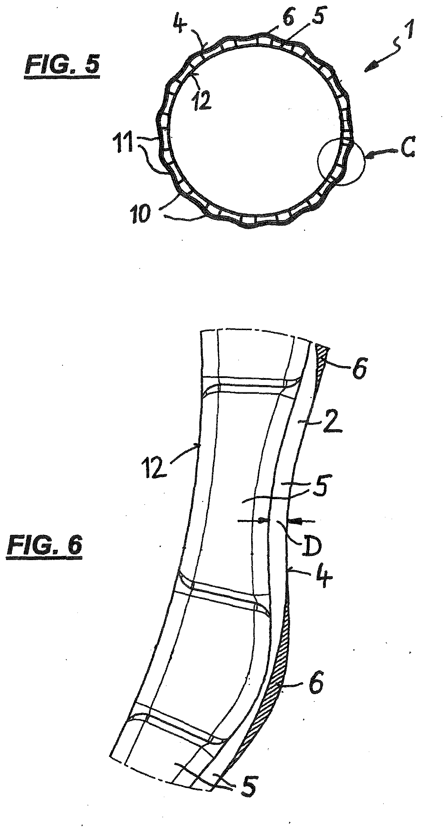

Eine etwas andere Ausführungsform eines Wellrohres 1 ist in einer Vorderansicht in Fig. 5 gezeigt, wobei die dort angegebene Einzelheit C in einer vergrößerten Detaildarstellung (als Schnittdarstellung ausgeführt) in Fig. 6 wiedergegeben ist.

Die hier gezeigte Ausführungsform unterscheidet sich von der nach Fig. 1 dadurch, dass die Wandabschnitte 6, welche die vorragenden Bereiche der Wellung 4 darstellen, sich nicht mehr radial über die gesamte Dicke ***D*** des Wellenberges 2 erstrecken, sondern radial in diesen nur bis zu einem Teil seiner Gesamtdicke ***D*** verlaufen, wie dies in der vergrößerten Detaildarstellung der Fig. 6 schraffiert eingezeichnet ist, während dort das weichere Material der Wandabschnitte 5 ungestrichelt gezeigt ist.

In diesem Fall besteht nur der Bereich, in dem die Wandabschnitte 6 nur teilweise in die Wanddicke ***D*** des Wellenberges hineinragen (gestrichelt gezeichnete Bereiche in Fig. 6), aus härterem Material, während der gesamte Rest der Wanddicke ***D*** aus dem weicheren Material der Wandabschnitte 5 besteht.

Bei dieser Ausführungsform kann eine besonders große Flexibilität des Wellrohres 1, größer als bei der Ausführungsform nach den Figuren 1 bis 4, erreicht werden.

Dabei ist aber weiterhin, wie bei der Ausführungsform der Figuren 1 bis 4, sichergestellt, dass in Reibkontakt mit einer Gegenfläche wiederum nur die radial vorragenden Wandbereiche 6 aus härterem Material gelangen. Dabei erstreckt sich bei der Ausführungsform der Figuren 5 und 6 das für einen Reibvorgang zur Verfügung stehende härtere Material der Wandabschnitte 6 radial insgesamt über eine geringere radiale Dicke als bei dem ersten Ausführungsbeispiel der Figuren 1 bis 4, so dass der Aufbau eines Wellrohres 1 nach den Figuren 5 und 6 dann von besonderem Interesse ist, wenn die zu erwartenden Reibvorgänge einen etwas geringeren Abrieb erwarten lassen.

Als Werkstoff für die Wandabschnitte 5 und 6 werden geeignete flexible Kunststoffe eingesetzt, wobei für den weicheren Werkstoff ein solcher mit einer Shore-A-Härte in einem Bereich von bevorzugt 10 bis 70 und für den härteren Werkstoff der Wandabschnitte 6 ein solcher mit einer Shore-D-Härte in einem Bereich von bevorzugt 40 bis 90 eingesetzt wird.

Dabei wird für den härteren Werkstoff bevorzugt ein solcher aus Polypropylen (PP) oder einem geeigneten Polyamid (PA), z. B. PA 12 oder PA 612, verwendet und für den weicheren Werkstoff ein solcher aus einem geeigneten thermoplastischen Elastomer (TPE).

Die Wellrohre 1 mit einem Aufbau, wie er in den Figuren 1 bis 4 gezeigt ist, oder mit einem Aufbau gemäß den Figuren 5 und 6 sind wegen der über ihren Umfang verteilten Wandabschnitte 5 aus weicherem Kunststoff sehr flexibel, ohne dass diese Flexibilität von den Wandbereichen 6 aus härterem Kunststoff beeinflusst wird. Vielmehr können die Wandbereiche 5 aus dem weicheren Kunststoff ganz gezielt im Hinblick auf die gewünschte Flexibilität gewählt und ausgelegt werden.

Demgegenüber sind die Wandbereiche aus härterem Kunststoff, welche die über den Umfang des Wellrohres gesehen radial vorspringenden Abschnitte der Wellenberge ausbilden, für Reibprozesse zuständig, welche durch bewegte, an ihnen anliegende Flächen ausgelöst werden, wobei sie im Hinblick auf die gewünschten Reibeigenschaften sowie die Abriebfestigkeit ebenfalls ganz gezielt durch eine geeignete Materialauswahl ausgelegt werden können, ohne dass auf diese Eigenschaften die Wandbereiche 5 mit einem Werkstoff geringerer Härte Einfluss nehmen.

## Patentansprüche

1. Wellrohr (1) aus flexiblem Kunststoff zum Ummanteln von Leitungen, mit über seine axiale Länge verteilten, abwechselnd aufeinanderfolgenden umlaufenden Wellenbergen (2) und Wellentälern (3), wobei die Wellenberge (2), im Querschnitt senkrecht zur Längsachse (M-M) des Wellrohres (1) gesehen, entlang ihrem Außenumfang jeweils mit einer Wellung (4) versehen sind, die in Umlaufrichtung jedes Wellenberges (2) abwechselnd radial vorragende Bereiche und radial nach innen versetzte Bereiche ausbildet, und dass das Wellrohr (1) sich axial über seine Länge erstreckende, in Umfangsrichtung nebeneinander liegende Wandabschnitte (5, 6) umfasst, deren einer (6) in der Wellung (4) die radial vorragenden Bereiche und deren anderer (5) die radial jeweils nach innen versetzt liegenden Bereiche ausbilden, wobei diese Wandabschnitte (5, 6) umlaufend abwechselnd aus Werkstoffen unterschiedlicher Härte bestehen.

2. Wellrohr nach Anspruch 1, **dadurch gekennzeichnet, dass** die Wandabschnitte (6), die die radial vorragenden Bereiche ausbilden, jeweils einen Werkstoff aufweisen, der härter ist als der Werkstoff der anderen, die radial innen liegenden Bereiche ausbildenden Wandabschnitte (5).

3. Wellrohr nach Anspruch 1 oder 2, **dadurch gekennzeichnet, dass** die Wandabschnitte (5, 6) in radialer Richtung jeweils die ganze Wanddicke (D) des Wellrohres (1) ausbilden.

4. Wellrohr nach Anspruch 1 oder 2, **dadurch gekennzeichnet, dass** die Wandabschnitte (6) aus härterem Werkstoff sich in radialer Richtung jeweils nur über einen Teil der Wanddicke (D) des Wellrohres (1) erstrecken, während das ganze restliche Wellrohr (1) aus dem weicheren Werkstoff besteht.

5. Wellrohr nach einem der Ansprüche 1 bis 4, **dadurch gekennzeichnet, dass** der weichere Werkstoff eine Shore-A-Härte im Bereich von 10 bis 70 aufweist.

6. Wellrohr nach einem der Ansprüche 1 bis 5, **dadurch gekennzeichnet, dass** der härtere Werkstoff eine Shore-D-Härte im Bereich von 40 bis 90 aufweist.

7. Wellrohr nach einem der Ansprüche 1 bis 6, **dadurch gekennzeichnet, dass** die Anzahl der Wandabschnitte (5, 6) aus weicherem Werkstoff und aus härterem Werkstoff jeweils 12 oder 16 beträgt.

8. Wellrohr nach einem der Ansprüche 1 bis 7, **dadurch gekennzeichnet, dass** in der umlaufenden Wellung (4) der Wellenberge (2) die radial vorragenden Bereiche der Wandabschnitte (6) aus härterem Werkstoff, in axialer Richtung des Wellrohres (1) gesehen, eine Breite (B) aufweisen, die größer als die Breite (b) der anschließenden Wandabschnitte (5) aus weicherem Werkstoff ist.

9. Wellrohr nach Anspruch 8, **dadurch gekennzeichnet, dass** die radial in der Wellung (4) der Wellenberge (2) vorragenden Bereiche der Wandabschnitte (6) aus härterem Werkstoff an ihren den benachbarten Wandabschnitten (5) aus weicherem Werkstoff zugewandten Seiten, in Umfangsrichtung gesehen, beidseits über jeweils einen radial gerichteten axialen Absatz (a) mit der jeweils zugewandten Seitenflanke (8) des benachbarten Wandabschnitts (5) aus weicherem Werkstoff verbunden sind.

10. Wellrohr nach einem der Ansprüche 1 bis 9, **dadurch gekennzeichnet, dass** der härtere Werkstoff aus PP oder einem PA besteht.

11. Wellrohr nach einem der Ansprüche 1 bis 10, **dadurch gekennzeichnet, dass** der weichere Werkstoff aus TPE besteht.

12. Wellrohr nach einem der Ansprüche 1 bis 11, **dadurch gekennzeichnet, dass** die Wandabschnitte (5, 6) parallel nebeneinander in Umfangsrichtung liegen.

## Claims

1. Corrugated tube (1) made of flexible plastic material for encasing wires, having circumferential peaks (2) and troughs (3) distributed in alternating succession over its axial length, wherein the peaks (2) are each provided, as seen in cross-section perpendicular to the longitudinal axis (M-M) of the corrugated tube (1), with a corrugation (4) along their outer circumference, which corrugation (4) alternately forms, in the circumferential direction of each peak (2), radially projecting regions and radially recessed regions, and that the corrugated tube (1) comprises wall sections (5, 6) adjacent to one another in the circumferential direction and extending axially over the length of the tube, one (6) of which forms the radially projecting regions in the corrugation (4) and the other (5) forms the respective radially recessed regions, these wall sections (5, 6) consisting, circumferentially alternately, of materials of different hardnesses.

2. Corrugated tube according to claim 1, **characterized in that** the wall sections (6) forming the radially projecting regions each have a material which is harder than the material of the other wall sections (5) forming the radially inner regions.

3. Corrugated tube according to claim 1 or 2, **characterized in that** the wall sections (5, 6) each form the entire wall thickness (D) of the corrugated tube (1) in the radial direction.

4. Corrugated tube according to claim 1 or 2, **characterized in that** the wall sections (6) made of harder material in each case extend in the radial direction only over a part of the wall thickness (D) of the corrugated tube (1), while the rest of the corrugated tube (1) is made of the softer material.

5. Corrugated tube according to one of claims 1 to 4, **characterized in that** the softer material has a Shore A hardness in the range from 10 to 70.

6. Corrugated tube according to one of claims 1 to 5, **characterized in that** the harder material has a Shore D hardness in the range from 40 to 90.

7. Corrugated tube according to one of claims 1 to 6, **characterized in that** the number of wall sections (5, 6) made of softer material and of harder material is 12 or 16, respectively.

8. Corrugated tube according to one of claims 1 to 7, **characterized in that**, in the circumferential corrugation (4) of the peaks (2), the radially projecting regions of the wall sections (6) made of harder material have, as seen in the axial direction of the corrugated tube (1), a breadth (B) which is greater than the breadth (b) of the adjoining wall sections (5) made of softer material.

9. Corrugated tube according to claim 8, **characterized in that** those regions of the wall sections (6) made of harder material which project radially in the corrugation (4) of the peaks (2), on their sides facing the adjacent wall sections (5) made of softer material, as seen in the circumferential direction, are connected on both sides, via a respective radially oriented axial setback (a), to the respectively facing side flank (8) of the adjacent wall section (5) made of softer material.

10. Corrugated tube according to one of claims 1 to 9, **characterized in that** the harder material consists of PP or a PA.

11. Corrugated tube according to any of claims 1 to 10, **characterized in that** the softer material consists of TPE.

12. Corrugated tube according to one of claims 1 to 11, **characterized in that** the wall sections (5, 6) lie parallel to one another in the circumferential direction.

## Revendications

1. Tuyau annelé (1) constitué d'un matériau plastique flexible de gainage de fils électriques, comportant des crêtes circonférentielles (2) et des creux (3) répartis selon une succession alternante sur sa longueur axiale, dans lequel les crêtes (2) sont individuellement pourvues, lorsqu'observées en coupe transversale perpendiculaire à l'axe longitudinal (M-M) du tuyau annelé (1), d'une cannelure (4) le long de leur circonférence extérieure, laquelle cannelure (4) forme, en alternance, dans la direction circonférentielle de chaque crête (2), des régions radialement en saillie et des régions radialement en creux, et dans lequel le tuyau annelé (1) comprend des sections de paroi (5, 6) adjacentes l'une à l'autre dans la direction circonférentielle et s'étendant axialement sur la longueur du tuyau, dont une section de paroi (6) forme les régions radialement en saillie de la cannelure (4) et dont l'autre section de paroi (5) forme les régions radialement en creux respectives, lesdites sections de paroi (5, 6) étant constituées, de manière circonférentielle alternée, de matériaux de dureté différente.

2. Tuyau annelé selon la revendication 1, **caractérisé en ce que** les sections de paroi (6) formant les régions radialement en saillie comportent individuellement un matériau qui est plus dur que le matériau des autres sections de paroi (5) formant les régions radialement intérieures.

3. Tuyau annelé selon la revendication 1 ou la revendication 2, **caractérisé en ce que** les sections de paroi (5, 6) forment individuellement toute l'épaisseur de paroi (D) du tuyau annelé (1) dans la direction radiale.

4. Tuyau annelé selon la revendication 1 ou la revendication 2, **caractérisé en ce que** les sections de paroi (6) constituées d'un matériau plus dur dans chaque cas ne s'étendent dans la direction radiale que sur une partie de l'épaisseur de paroi (D) du tuyau annelé (1), tandis que le reste du tuyau annelé (1) est constitué d'un matériau plus tendre.

5. Tuyau annelé selon l'une des revendications 1 à 4, **caractérisé en ce que** le matériau plus tendre a une dureté Shore A s'inscrivant dans la plage de 10 à 70.

6. Tuyau annelé selon l'une des revendications 1 à 5, **caractérisé en ce que** le matériau plus dur a une dureté Shore D s'inscrivant dans la plage de 40 à 90.

7. Tuyau annelé selon l'une des revendications 1 à 6, **caractérisé en ce que** le nombre de sections de paroi (5, 6) constituées de matériau plus tendre et de matériau plus dur est respectivement de 12 ou 16.

8. Tuyau annelé selon l'une des revendications 1 à 7, **caractérisé en ce que**, dans la cannelure circonférentielle (4) des crêtes (2), les régions radialement en saillie des sections de paroi (6) constituées d'un matériau plus dur ont, lorsqu'observées dans la direction axiale du tuyau annelé (1), une largeur (B) qui est supérieure à la largeur (b) des sections de paroi adjacentes (5) constituées de matériau plus tendre.

9. Tuyau annelé selon la revendication 8, **caractérisé en ce que** lesdites régions des sections de paroi (6) constituées de matériau plus dur qui font saillie radialement dans la cannelure (4) des crêtes (2), sur leur côté faisant face aux sections de paroi adjacentes (5) constituées de matériau plus tendre, lorsqu'observées dans la direction circonférentielle, sont reliées des deux côtés, par le biais d'un retrait axial orienté radialement respectif (a), au flanc latéral opposé respectif (8) de la section de paroi adjacente (5) constituée de matériau plus tendre.

10. Tuyau annelé selon l'une des revendications 1 à 9, **caractérisé en ce que** le matériau plus dur est constitué de PP ou de PA.

11. Tuyau annelé selon l'une quelconque des revendications 1 à 10, **caractérisé en ce que** le matériau plus tendre est constitué de TPE.

12. Tuyau annelé selon l'une des revendications 1 à 11, **caractérisé en ce que** les sections de paroi (5, 6) s'étendent parallèlement l'une à l'autre dans la direction circonférentielle.
